# EUROPÄISCHE PATENTSCHRIFT

(11) **EP 0 888 411 B1**
(45) Veröffentlichungstag und Bekanntmachung des Hinweises auf die Patenterteilung: **07.06.2000**
(21) Anmeldenummer: 97914264.3
(22) Anmeldetag: 18.03.1997
(51) Int. Cl.: C09D 11/02

(54) **FÄRBEMITTEL**
COLOURING AGENT
COLORANT

(30) Priorität: 18.03.1996 DE 19610560
(43) Veröffentlichungstag der Anmeldung: 07.01.1999
(73) Patentinhaber: Kaufmann, Rainer, 27753 Delmenhorst (DE)
(72) Erfinder: Kaufmann, Rainer, 27753 Delmenhorst (DE)
(74) Vertreter: Barske, Heiko, Dr. rer. nat.
(86) Internationale Anmeldenummer: EP9701357
(87) Internationale Veröffentlichungsnummer: WO9734957

(56) Entgegenhaltungen:
- CHEMICAL ABSTRACTS, vol. 121, no. 2, 11.Juli 1994 Columbus, Ohio, US; abstract no. 11964, MURAKAMI,KAKUJI ET ALL.: "Water-thinned ink compositions containing anionic additives" Seite 144; XP002036001 & JP 05 339 532 A (RICOH) 21.Dezember 1993
- CHEMICAL ABSTRACTS, vol. 120, no. 10, 7.März 1994 Columbus, Ohio, US; abstract no. 109666, TABAYASHI,ISAO ET ALL.: "Water-thinned ,jet printing inks" Seite 140; XP002036002 & JP 05 148 437 A (DAINIPPON INK & CHEMICALS) 15.Juni 1993

## Beschreibung

Die vorliegende Erfindung betrifft ein Färbemittel, insbesondere eine Tinte oder Druckfarbe. Die Erfindung betrifft außerdem ein Druckverfahren bzw. Schreibverfahren unter Aufbringung eines Färbemittels, insbesondere einer Tinte oder Farbe, mittels an sich bekannter Druck- bzw. Schreibvorrichtungen auf ein Medium bzw. einen Träger. Die Erfindung betrifft auch ein Verfahren zur Herstellung eines Färbemittels.

Färbemittel, insbesondere Tinten oder Druckfarben, sind seit langer Zeit bekannt. Schon zu Zeiten, als Färbemittel noch manuell auf geeignete Medien wie Pergament, Papier usw. aufgebracht wurden, jedoch auch in neuerer Zeit, in der die Aufbringung sowohl manuell als auch maschinell mittels geeigneter Druckvorrichtungen erfolgte, beispielsweise mittels Tintenstrahldruckern, bestand ein Problem darin, daß derartige Tinten insbesondere dann, wenn sie intensive, wasserlösliche Farbstoffe zur Färbung verwendeten, nach Trocknung auf dem Medium, auf das sie aufgebracht wurden, wasserempfindlich waren. Mit bisher bekannten Färbemitteln, insbesondere Tinten oder Druckfarben, auf geeignete Medien wie Papier usw. aufgebrachte Zeichen verwischen, wenn sie mit Feuchtigkeit, Schweiß oder gar mit Wasser oder wäßrigen Lösungen in Berührung kommen. Dies ist nicht nur bei mit Füllfederhaltern verschriebenen Tinten ein Nachteil, sondern auch beispielsweise bei Tintenstrahldruckern, wie sie bei der Textverarbeitung, in modernen Druckanlagen usw. verwendet werden. Die Wasserlöslichkeit derartiger Färbemittel resultiert aus der Einführung polarer, salzbildender Gruppen in das Farbstoffmolekül. Gute Wasserlöslichkeit wird regelmäßig erzielt, wenn mehrere polare, salzbildende Gruppen im Farbstoffmolekül vorhanden sind und das Gegen-Kation der salzbildenden Gruppe(n) ein Natriumion ist.

Gute Wasserlöslichkeit der Färbemittel ist andererseits erwünscht, da die Färbemittel zum Gebrauch in Form wäßriger oder zumindest zum überwiegenden Teil Wasser als Lösungsmittel enthaltender Lösungen bereitgestellt werden. Zahlreiche farbgebende Moleküle sind jedoch - abgesehen von ihren polaren, Löslichkeit verleihenden Seitengruppen - unpolar oder zumindest schlecht in wäßrigen Medien löslich. Dies hat bei der Lagerung und bei Gebrauch häufig zur Folge, daß der/die Farbstoff(e) ausfallen und eine wäßrige Phase zurücklassen, die an farbgebender Substanz mehr oder weniger stark verarmt ist. Die über dem ausgefallenen Feststoff stehende Lösung ist als Färbemittel ungeeignet. Zudem besteht die Gefahr, daß der/die ausgefallenen Feststoff(e) die Färbemittel führenden Kanäle in den Schreib- oder Druckgeräten verstopfen.

Der Erfindung liegt die Aufgabe zugrunde, ein Färbemittel, insbesondere eine Tinte oder Druckfarbe, zu schaffen, das/die auf Wasser basiert und aus wäßriger Lösung bei Lagerung/Gebrauch selbst unter ungünstigen Bedingungen nicht ausfällt, jedoch nach dem Trocknen auf dem Medium, auf das es/sie im Wege des Druckens bzw. Schreibens aufgebracht wird, wasserunlöslich wird.

Der Erfindung lag die weitere Aufgabe zugrunde, ein Druckverfahren zu schaffen, mit dem auf einem geeigneten Medium ein wasserunlösliches Druckbild erzeugt werden kann. Der Erfindung lag auch die Aufgabe zugrunde, ein Schreibverfahren bereitzustellen, das zu wasserunlöslichen Schriftzügen oder Zeichnungen auf einem geeigneten Medium führt.

Aufgabe der Erfindung war es auch, ein ökonomisches und reproduzierbares Verfahren zur Herstellung eines Färbemittels bzw. einer Druckfarbe zu schaffen, das auch unter industriellen Bedingungen unter Erhalt stabiler Färbemittel bzw. Druckfarben durchgeführt werden kann.

Der das Färbemittel betreffende Teil der Erfindungsaufgabe wird erfindungsgemäß gelöst durch ein Färbemittel, insbesondere eine Tinte oder Druckfarbe gemäß Patentanspruch 1. Bevorzugte Ausführungsformen des Färbemittels ergeben sich aus den Unteransprüchen 2 bis 9.

Der das Druckverfahren betreffende Teil der Erfindungsaufgabe wird gelöst durch ein Druckverfahren gemäß Patentanspruch 10. Der das Schreibverfahren betreffende Teil der Erfindungsaufgabe wird gelöst durch ein Schreibverfahren gemäß Patentanspruch 11. Bevorzugte Ausführungsformen dieser beiden Verfahren ergeben sich aus dem Unteranspruch 12.

Der das Herstellungsverfahren betreffende Teil der Erfindungsaufgabe wird gelöst durch ein Verfahren gemäß Patentanspruch 13.

Überraschenderweise wurde gefunden, daß die Wasserlöslichkeit bzw. Wiederauflösbarkeit des Färbemittels in Wasser oder wäßrigen Lösungen in Abhängigkeit vom pH-Wert des Mediums gesteuert werden kann und damit ein Mittel geschaffen wird, mit dem die Wasserlöslichkeit den durch den speziell verwendeten löslichen Farbstoff erzwungenen Gegebenheiten optimal angepaßt werden kann.

Das Färbemittel gemäß der Erfindung kann eine Tinte sein, wie sie üblicherweise für an sich bekannte Schreibvorrichtungen zum manuellen oder maschinellen Schreiben ver-wendet wird. Als Schreibvorrichtungen in Frage kommen in diesem Zusammenhang beispielsweise Füllfederhalter, Tinten-Kugelschreiber, Plotter für Zeichenanlagen oder Drucker für Datenverarbeitungsanlagen, Schreibsysteme usw.. Das Färbemittel kann jedoch auch eine Druckfarbe sein, wie sie in Druckmaschinen zur Anwendung kommt. Nachfolgend wird auf Tinten oder Druckfarben kurz als "Färbemittel" Bezug genommen.

Die Färbemittel gemäß der Erfindung enthalten als essentielle Komponenten Wasser und einen oder mehrere in Wasser lösliche(n) Farbstoff(e) mit anionischen Gruppen in Kombination mit der Vorstufe eines ersten Hilfsstoffes.

Als Wasser wird üblicherweise reines, d. h. entsalztes Wasser verwendet. In speziellen Anwendungen ist es jedoch auch möglich, übliches Leitungswasser zu verwenden, das regelmäßig in merklichen Konzentrationen kalkbildende Ionen gelöst enthält.

Die Färbemittel der Erfindung enthalten Wasser bevorzugt in Mengen von 50 bis 90 Gew.-Teilen, noch mehr bevorzugt in Mengen von 60 bis 80 Gew.-Teilen. Die Wassermenge kann in Abhängigkeit von der Intensität der Farbgebung des Farbstoffs schwanken. Wie nachfolgend noch beschrieben wird, kann Wasser als essentielle Komponente der erfindungsgemäßen Färbemittel teilweise durch andere Lösungsmittel einschließlich organischer Lösungsmittel ersetzt sein.

Eine weitere Komponente des erfindungsgemäßen Färbemittels ist ein oder sind mehrere in Wasser lösliche(r) Farbstoff(e). Vorzugsweise wird ein einzelner, in Wasser löslicher Farbstoff mit anionischen Gruppen verwendet. Dies ist jedoch nicht zwingend; zur Erzielung spezieller Farbeffekte lassen sich auch mehrere in Wasser lösliche Farbstoffe mit anionischen Gruppen miteinander vermischen. Die anionischen Gruppen am Farbstoffmolekül können bevorzugt anionische, unter Salzbildung neutralisierte Gruppen sein. Das Gegenion kann ein Wasserstoffion sein; bei Salzbildung sind jedoch Metallionen zugegen, besonders bevorzugt die Wasserlöslichkeit sichernde Metallionen wie Na⁺-Ionen, jedoch auch Ammonium-Ionen einschließlich Ammonium-Ionen mit organischen Substituenten.

Erfindungsgemäß kritisch ist, daß die anionischen Gruppen einen pKₐ-Wert im wesentlichen nicht über A aufweisen. Im Zusammenhang mit der vorliegenden Erfindung ist der Wert "A" kein absoluter Wert, sondern eine relative Maßzahl in Beziehung zu den pKₐ-Werten des ersten Hilfsstoffes (C) und des zweiten Hilfsstoffes (B). Bekanntermaßen ist der pKₐ-Wert eine Maßzahl für die Acidität von Säuren und ist definiert als der negative dekadische Logarithmus der Säurekonstante Kₐ, d.h. der Gleichgewichtskonstante der Dissoziationsreaktion

HA + H₂O ⇄ H₃O⁺ + A⁻,

worin HA die Säure und A⁻ das entsprechende Säureanion sind.

Gemäß den physikochemischen Grundlagen ist der Wert von Kₐ umso größer (und damit der Wert pKₐ umso kleiner), je stärker die entsprechende Säure HA ist.

Das erfindungsgemäße Färbemittel enthält in Kombination mit dem Wasser und dem in Wasser löslichen Farbstoff mit anionischen Gruppen, die einen pKₐ-Wert im wesentlichen nicht über A aufweisen, eine Vorstufe eines ersten Hilfsstoffes. Der erste Hilfsstoff liegt in dem Färbemittel nicht als solcher vor, sondern in Form einer Vorstufe, die im Verlauf einer chemischen Reaktion zu dem ersten Hilfsstoff selbst reagiert. Dieser erste Hilfsstoff weist als solcher einen pKₐ-Wert C auf, der erfindungsgemäß kleiner ist als der Wert A. Mit anderen Worten: Der erste Hilfsstoff ist eine stärkere Säure als der in Wasser lösliche Farbstoff mit anionischen Gruppen.

Auch der pKₐ-Wert "C" ist weniger wichtig in Bezug auf seinen absoluten Zahlenwert als vielmehr in Bezug auf seinen relativen Wert zum pKₐ-Wert des in Wasser löslichen Farbstoffs mit anionischen Gruppen.

Es entspricht einer bevorzugten Ausführungsform der Erfindung, daß das Färbemittel zusätzlich einen in dem Wasser gelösten zweiten Hilfsstoff mit einem pKₐ-Wert B enthält. wobei die Beziehung B > A > C gilt. Mit anderen Worten: Der in dem Wasser gelöste zweite Hilfsstoff ist in der erfindungsgemäß bevorzugten Ausführungsform eine weniger starke Säure als der in Wasser lösliche Farbstoff mit anionischen salzbildenden Gruppen. Auch im Zusammenhang mit dem pKₐ-Wert B ist der Zahlenwert als solcher weniger wichtig als die Tatsache, daß der Wert B größer ist als der Wert A und der Wert C. Es können auch mehrere zweite Hilfsstoffe zugegen sein.

In der Praxis hat es sich besonders bewährt, daß die an den in Wasser löslichen Farbstoff gebundenen anionischen Gruppen Sulfonsäuregruppen oder Carbonsäuregruppen sind. Diese Gruppen liefern nicht nur einen pKₐ-Wert, der zwischen dem des ersten Hilfsstoffs und dem des zweiten Hilfsstoffes liegt, sondern haben zudem den Vorteil, daß eine Vielzahl derartiger Farbstoffe bereits bekannt ist und sowohl hinsichtlich des Farbspektrums als auch hinsichtlich ihres pKₐ-Wert klar definiert sind und der obigen Definition entsprechen.

Die erfindungsgemäß verwendbaren Farbstoffe können aus den verschiedensten Klassen organischer Farbstoffe stammen, wie sie als solche bekannt sind und auch beim Färben von Schreib- und Druckmedien wie beispielsweise Papier verwendet werden, z.B. saure Farbstoffe (acid dyes wie acid red ... oder acid black ...), Direktfarbstoffe (direct dyes wie direct blue ... oder direct yellow) oder Reaktivfarbstoffe (reactive dyes wie reactive red ... oder reactive green ...), ohne daß dies die Auswahl beschränkt.

Besonders bevorzugte wasserlösliche Farbstoffe mit anionischen salzbildenden Gruppen sind gewählt aus der Gruppe der Nitrofarbstoffe, Monoazofarbstoffe, Diazofarbstoffe, Triazofarbstoffe, Polyazofarbstoffe, Stilbenfarbstoffe, Carotinoidfarbstoffe, Diphenylmethanfarbstoffe, Triarylmethanfarbstoffe, Xanthenfarbstoffe, Acridinfarbstoffe, Chinolinfarbstoffe, Methinfarbstoffe und Polymethinfarbstoffe, Thiazolfarbstoffe, Indaminfarbstoffe, Indophenolfarbstoffe, Azinfarbstoffe, Oxazinfarbstoffe, Thiazinfarbstoffe, Schwefelfarbstoffe, Lactonfarbstoffe, Aminoketonfarbstoffe, Hydroxyketonfarbstoffe, Anthrachinonfarbstoffe, Indigoidfarbstoffe, Phthalocyaninfarbstoffe oder Naturfarbstoffe. Derartige Farbstoffe sind in großer Vielzahl zur Verwendung in Färbemitteln bekannt und weisen insbesondere eine alle Farbtöne des Spektrums umfassende Farbstoff-Skala (Colour Index of Society of Dyers and Colourists, Charles Worth & Co. Ltd., Huddersfield) auf, so daß die spezielle Auswahl des Farbstoffs der jeweiligen Situation angepaßt werden kann und damit dem fachmännischen Können überlassen bleibt. Besonders geeignet sind als Farbstoffe beispielsweise Phthalocyanin-Farbstoffe (z.B. C.I. Direct Blue 199), Triazo-Farbstoffe oder Tetraazo-Farbstoffe (z.B. C.I. Direct Red 80), Nigrosin-Farbstoffe (z. B. C.I. Acid Black 2), Eosin-Farbstoffe (z.B. C.I. Acid Red 87).

Erfindungsgemäß haben sich als Farbstoffe, die mit Vorteil Verwendung finden, die aus der folgenden Tabelle 1 ersichtlichen Farbstoffe bewährt, ohne daß dies beschränkend ist:

**Tabelle 1**

| **Nr.** | **Bezeichnung Farbstoff** | **Hersteller** |
|---|---|---|
| **1** | **Schwarz** | |
| a | Drimaren Schwarz K3B, Reactive Black 5, 20505 | Clariant |
| b | Drimaren Schwarz PBL, Reactive Black 8 | Clariant |
| c | Drimaren Schwarz R2BL, Reactive Black 34 | Clariant |
| d | Nigrosin Schwarz, Acid Black 2, 50420 | Fluka |
| e | Duasyn Direktschwarz H Direct Black 171 | Hoechst |
| f | Cartasol Schwarz MG, Basic Black 11 | Clariant |
| g | Lanasysn Schwarz S-DL, Acid Black 194 (Azo-Chrom-Komplex) | Clariant |

| **2** | **Blau** | |
|---|---|---|
| a | Drimaren Türkis X-B, Reactive Blue 41 | Clariant |
| b | Drimaren Tükis PCO, Reactive Blue 207 | Clariant |
| c | Duasyn Direkttürkisblau FBL, Direct Blue 199, 74190 | Hoechst |
| d | Duasyn Direktblau GRL, Direct Blue 214, 23158 | Hoechst |
| e | Carta Türkis GL Direct Blue 86, 74180 | Clariant |
| f | Sadolan Violett E2R, Acid Violet 126 | Clariant |
| g | Cartasol Türkis RF | Clariant |

| **3** | **Rot** | |
|---|---|---|
| a | Procion Red MX-5B Reactive Red 2, 18200 | ICI |
| b | Remazol Red 3B, Reactive Red 23, 16202 | Hoechst |
| c | Drimaren Brillantrot PB, Reactive Red 187 | Clariant |
| d | Drimaren Brillantrot X2-B, Reactive Red 56 | Clariant |
| e | Drimaren Brillantrot K4BL, Reactive Red 147 | Clariant |
| f | Cartasol Rot 2GF, Direct Red 239 | Clariant |
| g | Cartasol Brillantorange 2RF, Direct Orange 118 | Clariant |
| h | Duasyn Direktrot 8B, Direct Red 81, 28160 | Hoechst |
| i | Indusol Rubinol SF, Direct Red 261 | Clariant |
| j | Solar Rubinol 3LR, Direct Violet 47, 25410 | Clariant |
| k | Solar Brillantrot BA, Direct Red 180, 35780 | Clariant |
| l | Duasyn Säureponceau 4RC Acid Red 18, 16255 | Hoechst |
| m | Basacid Rot 316, Acid Red 87, 45380 | BASF |
| n | Sandolan Rubinol E3 GPL, Acid Red 57, 17053 | Clariant |
| o | Sandolan Brillantrot N-BG, Acid Red 249, 18134 | Clariant |
| p | Morfast Red 101, Solvent Red 68 | Morton |

| **3** | **Rot (Fortsetzung)** | |
|---|---|---|
| q | Remazol Brillantrot F3B, Reactive Red 180 | Hoechst |
| r | Drimaren Rot X6-BN, Reactive Red 243 | Clariant |

| **4** | **Gelb** | |
|---|---|---|
| a | Remazol Brillantgelb GL, Reactive Yellow 37 | Hoechst |
| b | Remazol Gelb GR, Reactive Yellow 15 | Hoechst |
| c | Remazol Brillantgelb 4GL, Reactive Yellow 160 | Hoechst |
| d | Procion Yellow MX 3R, Reactive Orange 86 | ICI |
| e | Procion Yellow MX 8G, Reactive Yellow 86 | ICI |
| f | Duasyn Säuregelb XX, Acid Yellow 23, 19140 | Hoechst |
| g | Duasyn Direktgelb 6G, Direct Yellow 157, 13965 | Hoechst |
| h | Cartasol Gelb 5GF, Direct Yellow 148:1, (Azo) | Clariant |

| **5** | **Grün** | |
|---|---|---|
| a | Duasyn Säuregrün Acid Green 16, 44025 | Hoechst |
| b | Drimaren Brillantgrün X-6BL, Reactive Green 12 | Clariant |

Die genannten Farbstoffe haben sich deswegen besonders bewährt, weil sie erfindungsgemäß aus den wäßrigen Färbemittel-Lösungen bei Lagerung über längere Zeit nicht ausfallen und nach Auftrag auf ein zu beschreibendes oder zu bedruckendes Medium wie beispielsweise Papier einen intensiven, schnell trocknenden Farbton ergeben, der in Wasser im wesentlichen unlöslich ist.

Aus der vorstehenden Tabelle 1 werden beispielhaft die folgenden Farbstoffe genannt, die erfindungsgemäß besonders bevorzugt sind: Lanasyn Schwarz S-DL (Acid Black 194; Azo-Chrom-Komplex); Cartasol Türkis RF; Drimaren Rot X6-BN (Reactive Red 243) und Cartasol Gelb 5GF (Direct Yellow 148:1; Azo). Diese Farbstoffe ergeben besonders langzeitstabile wäßrige Lösungen mit der Vorstufe des ersten Hilfsstoffes, gegebenenfalls einem zweiten Hilfsstoff und gegebenenfalls weiteren geeigneten Additiven und lassen sich zu einem klaren, schnell trocknenden Schrift- bzw. Figurenbild mit bereits nach kurzer Zeit hoher Wasserfestigkeit verschreiben bzw. drucken.

Einer oder mehrere der Farbstoffe sind erfindungsgemäß besonders bevorzugt in Mengen im Bereich von 0,1 bis 20 Gew.-Teilen in den Färbemitteln zugegen, weiter bevorzugt in Mengen im Bereich von 1 bis 10 Gew.-Teilen, noch mehr bevorzugt in Mengen im Bereich von 3 bis 8 Gew.-Teilen, bezogen auf festen, z.B. pulverförmigen, Farbstoff.

Es entspricht einer weiteren, ebenfalls bevorzugten Ausführungsform der Erfindung, daß der in Wasser gelöste zweite Hilfsstoff eine alkalische Substanz ist. Alkalische Substanzen weisen definitionsgemäß eine sehr niedrige Säurestärke (und damit einen vergleichsweise hohen pKₐ-Wert) auf. Sie haben erfindungsgemäß bei Zusätzen, die dem Färbemittel seine Alkalität nehmen sollen, den Vorteil, den in Wasser löslichen Farbstoff mit anionischen Gruppen in der wäßrigen Phase vor dem Aufbringen auf das Medium bzw. den Träger, d.h. während der Lagerung und des Transports, in Lösung zu halten.

Besonders bevorzugte alkalische Substanzen sind Ammoniak und Amine, vorzugsweise Diamine. Ein spezielles, erfindungsgemäß mit Vorteil verwendbares Diamin ist Ethylendiamin. Wäßrige Lösungen führen selbst unter ungünstigen Lagerbedingungen über längere Zeit nicht zu einem Ausfall des in Wasser löslichen Farbstoffs mit anionischen Gruppen, wenn die entsprechenden Färbemittel Ethylendiamin enthalten. Wirksam sind auch Amin-Derivate wie Alkanolamine, beispielsweise Ethanolamin. So wird beispielsweise ein Ausfallen des in Wasser löslichen Farbstoffes Cartasol Gelb 5GF (C.I. Direct Yellow 148:1) selbst bei Lagerung über längere Zeit verhindert und trotzdem eine hochgradig wasserfeste Druckfarbe erhalten, wenn Ethanolamin als alkalische Substanz (= zweiter Hilfsstoff) verwendet wird. Erfindungsgemäß läßt sich ein zweiter Hilfsstoff oder lassen sich mehrere zweite Hilfsstoffe in Kombination verwenden.

Der zweite Hilfsstoff oder die zweiten Hilfsstoffe ist/sind in den erfindungsgemäßen Färbemitteln vorzugsweise in Mengen im Bereich von 0,1 bis 10 Gew.-Teilen zugegen, weiter bevorzugt in Mengen im Bereich von 1 bis 5 Gew.-Teilen.

Eine weitere bevorzugte Ausführungsform der Erfindung ist darauf gerichtet, daß die Vorstufe des ersten Hilfsstoffes in dem Färbemittel gelöst ist. Dies bedeutet, daß die Vorstufe der Substanz mit dem niedrigen pKₐ-Wert in der wäßrigen Phase enthalten ist.

Es entspricht einer alternativen, ebenfalls bevorzugten und in speziellen Anwendungsbereichen mit Vorteil verwendbaren Ausführungsform der Erfindung, daß das Färbemittel die Vorstufe des ersten Hilfsstoffes nicht in wäßriger Phase enthält, sondern diese in oder auf dem Medium zugegen ist, auf das die Wasser, Farbstoff und gegebenenfalls zweiten Hilfsstoff umfassende Färbemittel-Zusammensetzung aufgebracht wird, so daß das die Vorstufe des ersten Hilfsstoffes enthaltende Färbemittel erst in oder auf dem Medium entsteht. Dies hat den speziellen Vorteil, daß eine stabile Färbemittel-Lösung, gegebenenfalls mit einem Gehalt an zweitem Hilfsstoff, über lange Zeit gelagert werden kann und bei Verschreiben bzw. Drucken des Färbemittels die die Vorstufe des ersten Hilfsstoffs enthaltende Färbemittel-Zubereitung entsteht.

Besonders bevorzugt sind erfindungsgemäß solche Färbemittel, in denen die Vorstufe des ersten Hilfsstoffes eine Verbindung ist, die an der Luft den pH-Wert des Färbemittels erniedrigt. Ohne an eine theoretische Erklärung gebunden zu sein, wird hierzu derzeit angenommen, daß die Wirkung der Luft im vorliegenden Fall eine doppelte ist: Einerseits wird nämlich der Sauerstoff der Luft zur Überführung der Vorstufe des ersten Hilfsstoffes in den ersten Hilfsstoff selbst benötigt; zum anderen wird von der Luft das Wasser (sowie gegebenenfalls auch weitere Lösungsmittel) aufgenommen und damit eine "Trocknung" des Färbemittels bewirkt.

Die Erniedrigung des pH-Wertes des Färbemittels erfolgt bevorzugter Weise durch eine Verbindung mit niedrigem pKₐ-Wert. Folglich ist bevorzugterweise die Vorstufe des ersten Hilfsstoffes eine Verbindung, die an der Luft eine Verbindung mit einem niedrigen pKₐ-Wert freisetzt. Ein exemplarisches Beispiel (ohne die Erfindung hierauf zu beschränken) einer Vorstufe des ersten Hilfsstoffs ist eine Verbindung, die in der Luft eine Säure freisetzt. Erfindungsgemäß werden mit besonderem Vorteil als Vorstufe des ersten Hilfsstoffes Aldehyde verwendet. Beispielhaft sind hierfür Formaldehyd, Acedaldehyd, Paraldehyd, Glyoxal, Glyoxalsäure, Glutaraldehyd und Benzaldehyd zu nennen. Die vorstehend genannten Vorstufen des ersten Hilfsstoffes lassen sich an der Luft bequem zu Säuren umsetzen, nämlich beispielsweise zu Ameisensäure, Essigsäure, Glutarsäure und Benzoesäure.

Erfindungsgemäß können jedoch als Vorstufe des ersten Hilfsstoffes auch Vorstufen anorganischer Säuren verwendet werden, beispielsweise Sulfite oder Phosphite. Die genannten Verbindungen werden ebenfalls an der Luft als Säuren freigesetzt und können damit die Funktion des ersten Hilfsstoffes wahrnehmen, d.h. den pH-Wert des Färbemittels erniedrigen.

Es entspricht einer weiteren Ausführungsform der Erfindung, daß die Vorstufe des ersten Hilfsstoffes eine Kombination einer Säure mit einem flüchtigen alkalischen Mittel ist. Enthält also das erfindungsgemäße Färbemittel, die Kombination von Säure mit einem flüchtigen alkalischen Mittel als Vorstufe eines ersten Hilfsstoffes, kann nach Aufbringen des Färbemittels auf das Medium durch beispielsweise Drucken oder Schreiben das flüchtige alkalische Mittel an der Luft verdampfen. Damit wird die Säure in dem Färbemittel freigesetzt. Die Säure, die also der erste Hilfsstoff als solcher ist, weist erfindungsgemäß einen pKₐ-Wert C auf, der mit dem pKₐ-Wert A der salzbildenden Gruppen des in Wasser löslichen Farbstoffs bevorzugt über die obige Beziehung A > C verknüpft ist.

Besonders bevorzugt ist als Vorstufe des ersten Hilfsstoffes eine Kombination aus Salicylsäure und Ammoniak, aus Benzoesäure bzw. einem ihrer Derivate und Ammoniak, aus Adipinsäure und Ammoniak oder aus Milchsäure und Ammoniak. Start des Ammoniaks können auch geeignete flüchtige Amine verwendet werden. Wie leicht erkennbar, verdampft der Ammoniak bzw. das Amin aus dem wäßrigen Färbemittel, sobald man dieses an die Luft bringt, und setzt die entsprechende Säure frei. Mit besonderem Vorteil wird in den erfindungsgemäßen Färbemitteln ein Kombination aus Salicylsäure und Ammoniak oder aus Adipinsäure und Ammoniak verwendet. Diese bewirkt kein Ausfallen des Farbstoffes bei Lagerung und führt nach Aufbringen des Färbemittels auf ein zu bedruckendes Medium zu hoher Wasserfestigkeit des Druckbildes.

Die Vorstufe des ersten Hilfsstoffes (oder auch mehrere derartige Vorstufen erster Hilfsstoffe) sind in den Färbemitteln der Erfindung vorzugsweise in Mengen im Bereich von 1 bis 25 Gew.-Teilen zugegen, weiter bevorzugt in Mengen im Bereich von 5 bis 15 Gew.-Teilen.

Die erfindungsgemäßen Färbemittel können außer den vorstehend genannten Komponenten auch noch weitere Additive enthalten. Durch Zusatz derartiger Additive ist es möglich, speziellen Gegebenheiten im Zusammenhang mit dem Auftrag des Färbemittels auf ein Medium bzw. dem anschließenden Trocknungsvorgang einerseits oder der Stabilisierung des Färbemittels vor der eigentlichen Verwendung andererseits Rechnung zu tragen.

Beispiele für solche Additive sind organische Lösungsmittel, Oxidationsmittel, Bindemittel, Stabilisatoren, ohne jedoch auf diese Additive beschränkt zu sein.

Besonders bevorzugt ist ein Färbemittel mit den oben genannten Komponenten, das zusätzlich ein organisches Lösungsmittel enthält, das - weiter bevorzugt - einen Siedepunkt > 100° C aufweist. Beispiele für derartige Lösungsmittel sind Alkohole, besonders bevorzugt Glykole. Färbemittel, die derartige organische Lösungsmittel enthalten, weisen den Vorteil auf, daß sie nicht eintrocknen und daher auch dann in manuellen oder maschinellen Schreibgeräten verwendet werden können, wenn diese längere Zeit ohne Abdeckung der Luft ausgesetzt sind.

Gemäß einer weiteren bevorzugten Ausführungsform der Erfindung enthält das Färbemittel zusätzlich ein Oxidationsmittel. Beispiele für ein derartiges Oxidationsmittel sind Perchlorate, besonders bevorzugt in Wasser lösliche Perchlorate. Überraschenderweise hat sich nämlich gezeigt, daß mit derartigen Oxidationsmitteln die Überführung der Vorstufe des ersten Hilfsstoffes in den ersten Hilfsstoff selbst selbst dann möglich ist, wenn das Oxidationsmittel in geringen, ja fast katalytischen Mengen verwendet wird.

Es entspricht einer weiteren bevorzugten Ausführungsform der Erfindung, daß das Färbemittel zusätzlich ein Bindemittel enthält, vorzugsweise ein nur im alkalischen Bereich in Wasser lösliches Bindemittel. Solche Bindemittel sind beispielsweise Kolophoniumharze oder Derivate davon. Der Vorteil der Verwendung eines solchen Bindemittels besteht darin, daß dieses in dem zu lagernden bzw. zu transportierenden Färbemittel löslich ist, jedoch nach Ansäuern des Färbemittels in Folge der Überführung der Vorstufe des ersten Hilfsstoffes in den ersten Hilfsstoff, der den pH-Wert des Färbemittels erniedrigt, unlöslich wird. Damit wird die Aufgabe der Erfindung, einen in Wasser im wesentlichen unlöslichen Farbstoff zu schaffen, in besonders eleganter Weise gelöst.

Ebenfalls bevorzugt sind erfindungsgemäß Färbemittel, die geeignete Stabilisatoren enthalten. Als Stabilisator ist beispielsweise Tris-(hydroxymethyl-)aminomethan ("Tris") zu nennen. In mehreren Ausführungsformen der Erfindung zeigen beispielsweise Färbemittel, denen "Tris" zugesetzt wurde, eine besonders gute Lagerstabilität und ein exzellent wasserfestes Druckbild. Die Menge an "Tris" in den Färbemitteln der Erfindung kann mit Vorteil im Bereich von 0,1 bis 3 Gew.-Teilen, besonders bevorzugt bei 1,0 bis 2,0 Gew.-Teilen liegen.

Die erfindungsgemäßen Färbemittel werden im Rahmen an sich bekannter Verfahrensweisen hergestellt, beispielsweise dadurch, daß man Wasser, einen oder mehrere in Wasser lösliche(n) Farbstoff(e) mit anionischen Gruppen, die einen pKₐ-Wert im wesentlichen nicht über A aufweisen, gegebenenfalls die Vorstufe eines ersten Hilfsstoffes, der als solcher einen pKₐ-Wert C aufweist, gegebenenfalls einen oder mehrere in dem Wasser gelöster) zweite(n) Hilfsstoff(e) mit einem pKₐ-Wert von B und gegebenenfalls auch weitere Additive und Zusatzstoffe miteinander mischt. Gegebenenfalls kann dies bei erhöhter Temperatur geschehen.

Besonders gute Ergebnisse werden mit einem Verfahren zur Herstellung der erfindungsgemäßen Färbemittel erzielt, das durch die spezielle Reihenfolge der Zusammengabe der vorstehend genannten Komponenten gekennzeichnet ist. Es werden nämlich im Rahmen dieses aufgrund der guten Ergebnisse bevorzugten Verfahrens Färbemittel-Zubereitungen erhalten, die selbst bei ungünstigen Bedingungen über längere Lagerzeit keine Ausfällungen des Farbstoffes oder anderer Färbemittel-Komponenten zeigen und darüber hinaus zu einem Schreibbild bzw. Druckbild führen, das sehr schnell trocknet und in hohem Maße wasserfest ist.

Das Verfahren ist dadurch gekennzeichnet, daß Wasser vorgelegt wird; der in Wasser lösliche Farbstoff, gegebenenfalls zusammen mit dem/den zweiten Hilfsstoff(en) und/oder einem oder mehreren Additiven darin gelöst wird; und anschließend die Vorstufe des ersten Hilfsstoffes zugesetzt wird.

In dem oben beschriebenen Fall, daß das erfindungsgemäße Färbemittel die Vorstufe des ersten Hilfsstoffes nicht in wäßriger Phase enthält, sondern diese in oder auf dem Medium zugegen ist, auf das die Wasser, Farbstoff und gegebenenfalls zweiten Hilfsstoff umfassende Färbemittel-Zubereitung aufgebracht wird, besteht das erfindungsgemäße Verfahren aus den Schritten, daß Wasser vorgelegt wird und der in Wasser lösliche Farbstoff, gegebenenfalls zusammen mit dem/den zweiten Hilfsstoff(en) und/oder einem oder mehreren Additiven darin gelöst wird. Die "Zusammengabe" mit der Vorstufe des ersten Hilfsstoffes erfolgt dann auf dem Medium, auf das die Färbemittel-Zubereitung aufgebracht wird.

Bevorzugt werden die einzelnen Komponenten unter Bewegen des vorgelegten Wassers zusammengegeben, beispielsweise unter Rühren; dieses kann mit einem mechanischen Rührer, unter Bewegen der Lösung mit einem Druckstrahl oder auf andere, an sich bekannte Weise geschehen. Einer weiteren bevorzugten Ausführungsform entspricht es, daß das Wasser vor Zugabe des in Wasser löslichen Farbstoffes bzw. der anderen Komponenten erwärmt wird, beispielsweise auf eine Temperatur im Bereich von 20 bis 60 °C.

Ein spezielles Beispiel der Zubereitung der erfindungsgemäßen Färbebittel-Zubereitung besteht darin, daß Wasser auf eine Temperatur von 50 °C erwärmt wird und der in Wasser lösliche Farbstoff unter Rühren zusammen mit einer alkalischen Substanz wie z. B. Ethylendiamin und einem Stabilisator wie beispielsweise Tris-(hydroxymethyl-)aminome-than dem Wasser in der Wärme zugegeben wird. Anschließend wird dann die Vorstufe des ersten Hilfsstoffes, z. B. Ammoniak in Verbindung mit Salicylsäure, zugesetzt.

Das vorstehend beschriebene Färbemittel wird mit einem erfindungsgemäßen Druckverfahren oder Schreibverfahren unter Aufbringung eines Färbemittels auf ein Medium eingesetzt. Die Aufbringung auf das Medium erfolgt beispielsweise mittels an sich bekannter Druckvorrichtungen oder Schreibvorrichtungen, die das erfindungsgemäße Färbemittel enthalten oder denen es auf dem Fachmann an sich bekannten Wegen, beispielsweise über entsprechende Leitungen, zugeführt wird. Für die erfindungsgemäßen Verfahren eignen sich die Färbemittel nach einem oder mehreren der oben näher beschriebenen Ausführungsformen deswegen optimal, weil sie nicht nur vor der Verwendung stabil lagerbar sind, ohne daß der Farbstoff oder andere Komponenten des Färbemittels ausfallen, sondern auch nach dem Auftragen schnell trocknen und in Wasser im wesentlichen unlösliche Zeichen, Linien, Flächen usw. auf dem Medium ergeben.

Erfindungsgemäß bevorzugt wird für die genannten Druckverfahren ein Färbemittel verwendet, das wenigstens die essentiellen Komponenten Wasser sowie einen oder mehrere in Wasser lösliche(n) Farbstoff(e) mit anionischen Gruppen in Kombination mit der Vorstufe des ersten Hilfsstoffes, gegebenenfalls zusätzlich auch einen oder mehrere in dem Wasser gelöste(n) zweite(n) Hilfsstoff(e), enthält.

Einer weiteren bevorzugten Ausführungsform entspricht jedoch ein Druckverfahren oder Schreibverfahren, in dem ein Medium verwendet wird, das auf seine Oberfläche aufgebracht oder in das Medium eingearbeitet den ersten Hilfsstoff oder eine Vorstufe davon aufweist.

In den erfindungsgemäßen Druckverfahren oder Schreibverfahren können als Medium Träger völlig unterschiedlichen chemischen Aufbaus bzw. physikalischer Oberflächenbeschaffenheit verwendet werden. Besonders bevorzugt ist als Medium Papier. Es sind jedoch auch andere Medien, die meist flächig sind, jedoch nicht sein müssen, verwendbar. Beispiele für andere Medien sind aus Kunststoffen bestehende Medien (wie z.B. Kunststoff-Folien) oder mit Kunststoffen beschichtete Medien, jedoch auch Medien aus Holz, Metall, Keramik, aus textilen Materialien, Leder usw..

Im Rahmen der Erfindung werden also mit dem Färbemittel im wesentlichen wasserunlösliche Farben erhalten, sobald durch physikalische und/oder chemische Reaktionen die Vorstufe des ersten Hilfsstoffes in den ersten Hilfsstoff überführt wurde und letzterer den pH-Wert des Färbemittels auf dem Medium erniedrigt. Unter Verdampfen des Wassers wird ein in Wasser unlöslicher Farbstoff erhalten. Zu den genannten chemischen und physikalischen Reaktionen tragen die vorstehend genannten Zusätze bzw. Additive in optimaler Weise bei.

Die Erfindung wird nachfolgend unter Bezugnahme auf Ausführungsbeispiele näher erläutert, ohne jedoch auf diese beschränkt zu sein. Es werden Beispiele für in der Praxis bewährte erfindungsgemäße Färbemittel bzw. Tinten angegeben. Die Zahlenangaben sind auf das Gewicht bezogene Teile (Gew.-Teile). Die Färbemittel bzw. Tinten sind unter Luftabschluß, d.h. in geschlossenen Behältern aufbewahrt, langzeitstabil. Sie weisen ein sehr gutes Fließverhalten auf und trocknen rasch. Nach dem Trocknen, d.h. bereits wenige Minuten bis Stunden nach der Aufbringung auf das Medium, sind die gebildeten Farben vollkommen wasserfest. Letzteres gilt insbesondere für solche Tinten, die eine Bindemittel-Komponente enthalten. Diese verbessert zusätzlich die Haftung des Färbemittels bzw. der Tinte auf einem Medium wie beispielsweise auf Papier.

### Beispiel 1

### Herstellung eines Färbemittels in Form einer Tinte

In einem mit einem Magnetrührer bestückten und auf einer heizbaren Rührmotorplatte stehenden Becherglas wurden 140 Gew.-Teile Wasser auf 50 °C erwärmt. Dem Wasser wurden nacheinander 10 Gew.-Teile Ethanolamin, 7 Gew.-Teile Duasyn Direkttürkisblau FBL (C.I. Direct Blue 199, 74190; Hersteller: Firma Hoechst AG) in Pulverform und 1,5 Gew.-Teile "Tris" in kleinen Mengen zugesetzt, und es wurde gerührt, bis alle Komponenten vollständig gelöst waren. Die klare, dunkeltürkisblaue Lösung wurde anschließend 32 Gew.-Teilen Ammoniumhydroxid (25 % in Wasser) versetzt, und es wurden danach unter Rühren 5 Gew.-Teile Adipinsäure zugegeben.

Die Lösung war vollständig klar. Weder bei Betrachten (durch eine 5 cm dicke Schicht) noch bei Filtrieren wurden feste Ausfällungen festgestellt.

Die Wasserfestigkeit wurde in der Weise getestet, daß auf eine mit einem Tintenstrahldrucker mit der Färbemittel-Zubereitung gedruckte, vollständig trockene Markierung ein Wassertropfen aufgetropft wurde. Die Wasserfestigkeit wurde mit "sehr gut" bewertet, wenn sich um die Farbmarkierung kein sichtbarer Hof aus mit Wasser verdünntem Färbemittel bildete. Eine Bewertung mit "gut" erfolgte dann, wenn sich um die Farbmarkierung ein schwach sichtbarer Hof aus mit Wasser verdünntem Färbemittel bildete.

Im vorliegenden Fall wurde die Wasserfestigkeit mit "gut" bewertet.

Weitere Rezepturen von Färbemittel-Zubereitungen gemäß der Erfindung ergeben sich aus den folgenden Beispielen 2 bis 5 sowie Beispiel 6 mit Tabelle 2.

### Beispiel 2

Phthalocyanin-Farbstoff, C.I. Direct Blue 199
- Rezeptur (Gew.-Teile):: 70 Wasser 3 Ethylendiamin
5 Direct Blue 199
10 Ammoniumhydroxid (25% in Wasser)
4 Glutaraldehyd
2 Glutarsäureanhydrid
5 Salicylsäure

Die Formel des Farbstoffes C.I. Direct Blue 199 ist folgende:

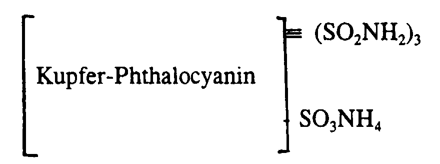

### Beispiel 3

Trisazo-Farbstoff, C.I. Direct Red 80
- Rezeptur (Gew.-Teile):: 70 Wasser
5 Direct Red 80
3 Ethylendiamin
10 Ammoniumhydroxid (25 % in Wasser)
4 Glutaraldehyd
5 Salicylsäure

Die Formel des Farbstoffes C.I. Direct Red 80 ist folgende:

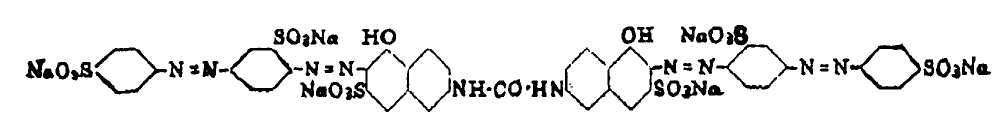

### Beispiel 4

Wasserlöslicher Nigrosinfarbstoff, C.I. Acid Black 2
- Rezeptur (Gew.-Teile):: 70 Wasser
10 Acid Black 2
3 Ethylendiamin
10 Ammoniumhydroxid (25 % in Wasser)
5 Glutaraldehyd
2 Glutarsäureanhydrid
5 Salicylsäure

Der Farbstoff C.I. Acid Black 2 wird durch Sulfonieren von Nigrosin und Umwandeln der jeweiligen Produkte in Natriumsalz hergestellt, wie beispielsweise in Wolff, Ken. News, 39 (1879) beschrieben.

### Beispiel 5

Eosin-Farbstoff, C.I. Acid Red 87
- Rezeptur (Gew.-Teile):: 70 Wasser
4 Acid Red 87
3 Ethylendiamin
10 Ammoniumhydroxid (25% in Wasser)
5 Glutaraldehyd
5 Salicylsäure

Die Formel von Eosin ist folgende:

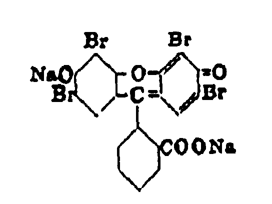

### Beispiel 6

Weitere Rezepturen von Färbemittel-Zubereitungen ergeben sich aus der nachfolgenden Tabelle 2. Tabelle 2 gibt auch die Ergebnisse der Tests zur Lagerstabilität und Wasserbeständigkeit an.

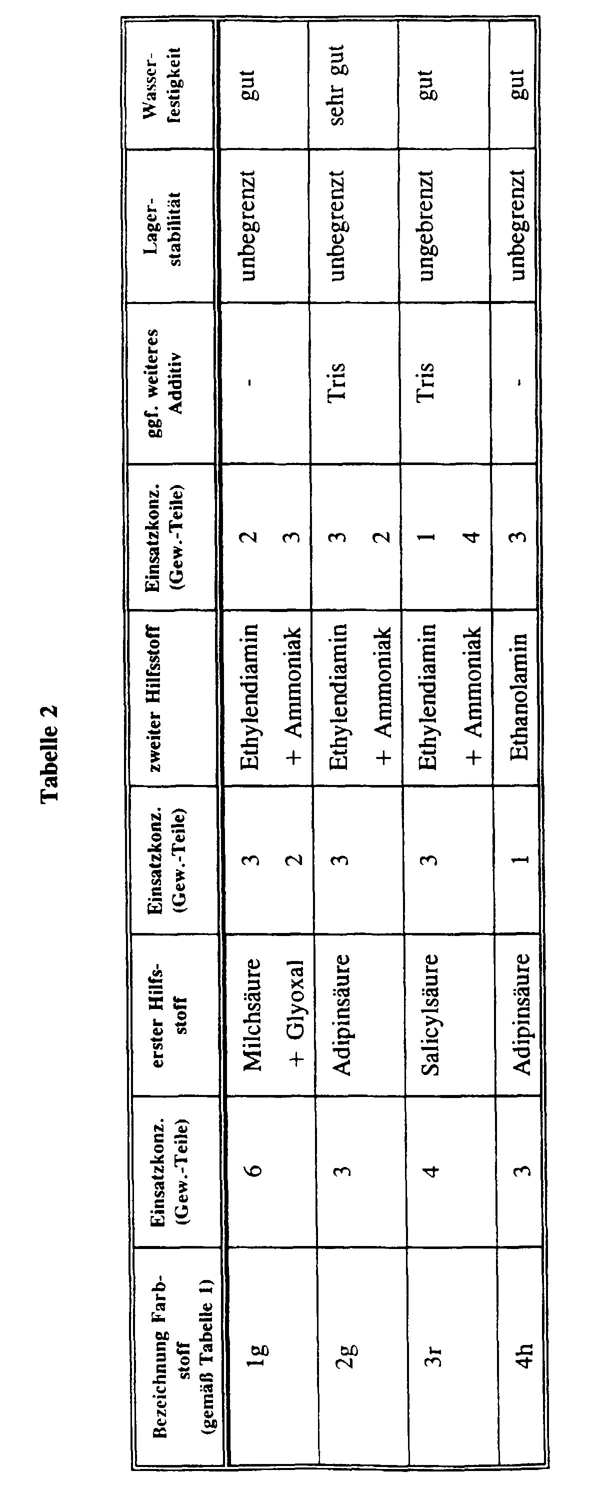

## Patentansprüche

1. Färbemittel, enthaltend
- Wasser;
- einen in Wasser löslichen Farbstoff mit anionischen Gruppen, die einen pKₐ-Wert nicht über A aufweisen;
- in Kombination mit einer Vorstufe eines ersten Hilfsstoffes, die im Verlauf einer chemischen Reaktion zu dem ersten Hilfsstoff reagiert,wobei der erste Hilfsstoff als solcher den pKₐ-Wert C aufweist und die Beziehung A > C gilt; und
- zusätzlich einen oder mehrere in dem Wasser gelöste(n) zweite(n) Hilfsstoff(e) mit einem pKₐ-Wert B, wobei die Beziehung B > A > C gilt.

2. Färbemittel nach Anspruch 1, worin der in Wasser gelöste zweite Hilfsstoff eine alkalische Substanz ist.

3. Färbemittel nach Anspruch 2, worin die alkalische Substanz Ammoniak oder ein Amin, vorzugsweise ein Diamin, oder ein Alkanolamin, vorzugsweise Ethanolamin, umfaßt.

4. Färbemittel nach einem der Ansprüche 1 bis 3, worin die Vorstufe des ersten Hilfsstoffes in dem Wasser des Färbemittels gelöst ist.

5. Färbemittel nach einem der Ansprüche 1 bis 3, worin die Vorstufe des ersten Hilfsstoffes in oder auf dem Medium zugegen ist, auf das die Wasser, Farbstoff und gegebenenfalls zweiten Hilfsstoff umfassende Färbemittelzubereitung aufgebracht wird.

6. Färbemittel nach Anspruch 4 und Anspruch 5, worin die Vorstufe des ersten Hilfsstoffes eine Verbindung ist, die an der Luft den pH-Wert des Färbemittels erniedrigt, bevorzugt eine Verbindung ist, die an der Luft eine Verbindung mit niedrigem pKₐ-Wert freisetzt, besonders bevorzugt eine Verbindung ist, die an der Luft eine Säure freisetzt.

7. Färbemittel nach Anspruch 6, worin die Vorstufe des ersten Hilfsstoffes eine Kombination einer Säure mit einem flüchtigen alkalischen Mittel ist, bevorzugt eine Kombination aus Salicylsäure und Ammoniak, aus Benzoesäure bzw. einem ihrer Derivate und Ammoniak, aus Adipinsäure und Ammoniak oder aus Milchsäure und Ammoniak umfaßt.

8. Färbemittel nach einem der Ansprüche 1 bis 7 in Form einer Tinte oder Druckfarbe.

9. Druckverfahren unter Aufbringung eines Färbemittels, insbesondere einer Tinte oder Druckfarbe, mittels an sich bekannter Druckvorrichtungen auf ein Medium, worin als Färbemittel ein oder mehrere Färbemittel nach einem oder mehreren der Ansprüche 1 bis 8 verwendet werden.

10. Schreibverfahren unter Aufbringung eines Färbemittels, insbesondere einer Tinte oder Farbe, mittels an sich bekannter Schreibvorrichtungen auf ein Medium, worin als Färbemittel ein oder mehrere Färbemittel nach einem oder mehreren der Ansprüche 1 bis 8 verwendet werden.

11. Druckverfahren nach Anspruch 9 oder Schreibverfahren nach Anspruch 10, worin ein Medium verwendet wird, das auf seine Oberfläche aufgebracht oder in das Medium eingearbeitet den ersten Hilfsstoff oder eine Vorstufe davon aufweist.

12. Verfahren zur Herstellung eines Färbemittels nach einem der Ansprüche 1 bis 8, umfassend die Schritte, daß
(a) Wasser vorgelegt wird;
(b) der in Wasser lösliche Farbstoff zusammen mit dem/den zweiten Hilfsstoff(en) und gegebenenfalls einem oder mehreren weiteren Additv(en) darin gelöst wird; und
(c) anschließend die Vorstufe des ersten Hilfsstoffes entweder der in Schritt (b) erhaltenen Lösung zugesetzt oder mit der in Schritt (b) erhaltenen Lösung in Kontakt gebracht wird.

13. Verwendung eines Färbemittels, das enthält:
- Wasser;
- einen in Wasser löslichen Farbstoff mit anionischen Gruppen, die einen pKₐ-Wert nicht über A aufweisen;
- in Kombination mit einer Vorstufe eines ersten Hilfsstoffes, die im Verlauf einer chemischen Reaktion zu dem ersten Hilfsstoff reagiert,wobei der erste Hilfsstoff als solcher den pKₐ-Wert C aufweist und die Beziehung A > C gilt;
in Schreib- und Druckverfahren mit Ausnahme von Tintenstrahl-Druckverfahren.

14. Verwendung eines Färbemittels nach einem der Patentansprüche 1 bis 8 in Schreib- und Druckverfahren.

## Claims

1. Colouring composition comprising
- water;
- a water-soluble dye containing anionic groups which have a pKₐ value not exceeding A;
- in combination with a precursor of a first auxiliary which reacts in the course of a chemical reaction to give the first auxiliary, where the first auxiliary as such has a pKₐ value C, and the relationship A > C applies; and
- in addition, one or more second auxiliaries having a pKₐ value B which are dissolved in the water, where the relationship B > A > C applies.

2. Colouring composition according to Claim 1, in which the second auxiliary dissolved in water is an alkaline substance.

3. Colouring composition according to Claim 2, in which the alkaline substance comprises ammonia or an amine, preferably a diamine, or an alkanolamine, preferably ethanolamine.

4. Colouring composition according to one of Claims 1 to 3, in which the precursor of the first auxiliary is dissolved in the water of the colouring composition.

5. Colouring composition according to one of Claims 1 to 3, in which the precursor of the first auxiliary is present in or on the medium to which the colouring composition preparation comprising water, dye and, if used, second auxiliary is applied.

6. Colouring compositions according to Claim 4 and Claim 5, in which the precursor of the first auxiliary is a compound which lowers the pH of the colouring composition in air, preferably a compound which liberates a compound having a low pKₐ value in air, particularly preferably a compound which liberates an acid in air.

7. Colouring composition according to Claim 6, in which the precursor of the first auxiliary is a combination of an acid with a volatile alkaline agent, preferably a combination of salicylic acid and ammonia, of benzoic acid or a derivative thereof and ammonia, of adipic acid and ammonia, or of lactic acid and ammonium.

8. Colouring composition according to one of Claims 1 to 7 in the form of a writing ink or printing ink.

9. Printing process involving application of a colouring composition, in particular a writing ink or printing ink, to a medium by means of printing apparatuses known per se, in which the colouring composition used is one or more colouring compositions according to one or more of Claims 1 to 8.

10. Writing process involving application of a colouring composition, in particular a writing ink or printing ink, to a medium by means of writing apparatuses known per se, in which the colouring composition used is one or more colouring compositions according to one or more of Claims 1 to 8.

11. Printing process according to Claim 9 or writing process according to Claim 10, in which use is made of a medium which has the first auxiliary or a precursor thereof applied to its surface or incorporated into the medium.

12. Process for the preparation of a colouring composition according to one of Claims 1 to 8, comprising the steps of
(a) introducing water;
(b) dissolving the water-soluble dye therein together with the second auxiliary or auxiliaries and optionally one or more further additive(s); and
(c) subsequently either adding the precursor of the first auxiliary to the solution obtained in step (b) or bringing it into contact with the solution obtained in step (b).

13. Use of a colouring composition comprising:
- water;
- a water-soluble dye containing anionic groups which have a pKₐ value not exceeding A;
- in combination with a precursor of a first auxiliary which reacts in the course of a chemical reaction to give the first auxiliary, where the first auxiliary as such has a pKₐ value C, and the relationship A > C applies; and
in writing and printing processes, with the exception of ink-jet printing processes.

14. Use of a colouring composition according to one of Patent Claims 1 to 8 in writing and printing processes.

## Revendications

1. Agent de coloration contenant
- de l'eau;
- un colorant soluble dans l'eau avec des groupes anioniques présentant une valeur pKₐ ne dépassant pas A;
- en combinaison avec une phase préalable d'une première substance auxiliaire qui au cours d'une réaction chimique réagit avec la première substance auxiliaire, la première substance auxiliaire en tant que telle présentant la valeur pKₐ C et la relation A > C étant valable;
et
- en complément une ou plusieurs deuxième(s) substance(s) auxiliaire(s) dissoute(s) dans l'eau avec une valeur pKₐ B, la relation B > A > C étant valable.

2. Agent de coloration selon la revendication 1, où la deuxième substance auxiliaire dissoute dans l'eau est une substance alcaline.

3. Agent de coloration selon la revendication 2, où la substance alcaline comprend de l'ammoniaque ou une amine, de préférence une diamine, ou une alkamine, de préférence de l'amine d'éthanol.

4. Agent de coloration selon l'une des revendications 1 à 3, où la phase préalable de la première substance auxiliaire est dissoute dans l'eau de l'agent de coloration.

5. Agent de coloration selon l'une des revendications 1 à 3, où la phase préalable de la première substance auxiliaire est présente dans ou sur le support sur lequel sera appliquée la préparation d'agent de coloration contenant de l'eau, du colorant et le cas échéant une deuxième substance auxiliaire.

6. Agent de coloration selon la revendication 4 et la revendication 5, où la phase préalable de la première substance auxiliaire est un composé réduisant à l'air la valeur pH de l'agent de coloration, de préférence un composé qui à l'air libère un composé avec une faible valeur pKₐ, particulièrement préféré un composé libérant à l'air un acide.

7. Agent de coloration selon la revendication 6, où la phase préalable de la première substance auxiliaire est une combinaison d'un acide avec un agent alcalin volatile, de préférence une combinaison d'acide salicylique et d'ammoniaque, d'acide benzoïque ou l'un de ses dérivés et d'ammoniaque, d'acide adipique et d'ammoniaque ou d'acide lactique et d'ammoniaque.

8. Agent de coloration selon l'une des revendications 1 à 7 sous forme d'une encre ou d'une encre d'imprimerie.

9. Procédé d'impression appliquant un agent de coloration, notamment une encre ou une encre d'imprimerie à l'aide de dispositifs d'impression connus en soi sur un support, où un ou plusieurs agents de coloration selon l'une ou plusieurs des revendications 1 à 8 est/sont utilisé(s) comme agent de coloration.

10. Procédé d'écriture appliquant un agent de coloration, notamment une encre ou une encre d'imprimerie à l'aide de dispositifs d'écriture connus en soi sur un support, où un ou plusieurs agents de coloration selon l'une ou plusieurs des revendications 1 à 8 est/sont utilisé(s) comme agent de coloration.

11. Procédé d'impression selon la revendication 9 ou procédé d'écriture selon la revendication 10, où un support est utilisé présentant, appliquée sur sa surface ou incorporée dans le support, la première substance auxiliaire ou une phase préalable de celle-ci.

12. Procédé de fabrication d'un agent de coloration selon l'une des revendications 1 à 8, comprenant les étapes suivantes:
(a) on prend de l'eau;
(b) on y dissout le colorant soluble dans l'eau ensemble avec la/les deuxième(s) substance(s) auxiliaire(s) et le cas échéant un ou plusieurs autre(s) additif(s); et
(c) soit on ajoute ensuite la phase préalable de la première substance à la solution obtenue dans l'étape (b) soit on le met en contact avec la solution obtenue dans l'étape (b).

13. Utilisation d'un agent de coloration comprenant :
- de l'eau;
- un colorant soluble dans l'eau avec des groupes anioniques présentant une valeur pKₐ ne dépassant pas A;
- en combinaison avec une phase préalable d'une première substance auxiliaire qui, au cours d'une réaction chimique réagit avec la première substance auxiliaire, la première substance auxiliaire en tant que telle présentant la valeur pKₐ C et la relation A > C étant valable; dans des procédés d'écriture et d'impression à l'exception de procédés d'impression à jet d'encre.

14. Utilisation d'un agent de coloration selon l'une des revendications 1 à 8 dans des procédés d'écriture et d'impression.
